# FASCICULE DE BREVET EUROPEEN

(11) **EP 0 545 754 B1**
(45) Date de publication et mention de la délivrance du brevet: **08.05.1996**
(21) Numéro de dépôt: 92403083.6
(22) Date de dépôt: 17.11.1992
(51) Int. Cl.: B05B 11/04, G01F 11/08

(54) **Distributeur doseur**
Dosierspender
Dosing dispenser

(30) Priorité: 05.12.1991 FR 9115072
(43) Date de publication de la demande: 09.06.1993
(73) Titulaire: L'OREAL, F-75008 Paris (FR)
(72) Inventeur: Goncalves, Antonin, F-95160 Montmorency (FR)
(74) Mandataire: Peuscet, Jacques

(56) Documents cités:
- EP-A- 0 196 288
- DE-U- 9 000 921
- FR-A- 1 413 975
- FR-A- 2 305 365
- US-A- 4 067 499
- US-A- 4 177 939

## Description

L'invention concerne un distributeur doseur, en particulier pour des produits liquides et visqueux.

Compte tenu du désir grandissant qu'ont les utilisateurs et consommateurs de n'utiliser ou consommer que des produits conditionnés dans des récipients ne comprenant pas de gaz propulseurs génants pour l'environnement, il devient de plus en plus nécessaire de concevoir des conditionnements à pression atmosphérique pour des produits liquides et/ou visqueux permettant une distribution et un dosage du produit conditionné ainsi qu'une manipulation simple et sûre de l'emballage lors de l'application du produit.

On savait déjà, avant même la création de conditionnements pressurisés, équiper des récipients destinés à permettre une distribution dosée de produit avec des têtes comprenant un mécanisme manuel de pompage et/ou de vaporisation. Mais, indépendamment de la complexité et du prix d'une telle tête, son principe de fonctionnement nécessitait généralement de prévoir un tube plongeur, s'étendant de la tête de pompage jusqu'au fond du récipient.

Le brevet français 2 353 455 a déjà proposé un distributeur goutte à goutte non pressurisé pour collyres liquides, qui comprend un embout déformable fixé sur le goulot d'un flacon. La formation de gouttes, lors de l'utilisation de ce distributeur, est obtenue par une déformation de l'embout distributeur : cette déformation est provoquée par les doigts de l'utilisateur, par compression radiale élastique de deux nervures diamétralement opposées dont est muni l'embout distributeur. Indépendamment du fait que la taille de la goutte, et donc la dose de produit, est définie par les dimensions des différents éléments du distributeur, ce qui exclut de pouvoir faire varier le dosage d'une utilisation à l'autre, il y a action directe sur l'embout distributeur, ce qui implique un risque d'écrasement complet et répété de l'embout d'où peut résulter un mauvais fonctionnement prématuré de ce dernier ; un tel dispositif ne présente donc pas la fiabilité requise si le vidage du flacon nécessite un nombre important de manoeuvres de l'embout. Par ailleurs, l'utilisation d'un tel distributeur goutte à goutte est essentiellement limitée aux produits liquides peu visqueux. On a déjà proposé dans le modèle d'utilité allemand

9 000 921 un distributeur doseur comportant les caractéristiques du préambule de la revendication 1, à savoir un flacon en forme de soufflet logé dans un étui coiffé d'un capot traversé par une tubulure de sortie portée par le flacon, le capot étant vissable dans l'étui pour comprimer le soufflet et distribuer le produit contenu dans le flacon ; un tel distributeur doseur présente l'inconvénient d'être difficile à manipuler, cette difficulté allant croissant au fur et à mesure que le capot pénètre dans l'étui.

Le but de l'invention est de proposer un distributeur doseur de structure simple, qui permette un dosage de produit liquide, visqueux ou non, et qui assure, de façon fiable, par une manipulation simple et sûre, le vidage progressif complet du récipient où est stocké le produit conditionné dans ledit distributeur.

La présente invention a donc d'abord pour objet un distributeur doseur, en particulier pour produit liquide et visqueux, comportant un flacon renfermant le produit à distribuer, sur le goulot duquel est fixé un embout distributeur, ledit flacon étant logé dans un étui qui est coiffé d'un capot, évidé en son centre, ledit capot retenant le flacon dans l'étui et étant traversé par l'embout distributeur pour permettre la distribution, caractérisé par le fait que le goulot du flacon est agencé de manière déformable et que le capot est muni d'au moins un poussoir latéral permettant d'obtenir la déformation du goulot pour provoquer la distribution du produit.

Dans la définition ci-dessus, le terme "flacon" est employé de façon générique et doit être considéré comme recouvrant un récipient de forme quelconque.

Préférentiellement, le goulot du flacon comporte un soufflet ; ce soufflet constitue une partie élastiquement déformable du flacon, alors que les autres parties sont relativement rigides. Un soufflet est un dispositif connu et l'on sait qu'il permet, dans la limite définie par ses dimensions, de délivrer à chaque manoeuvre une quantité de produit désirée, qui est fonction du degré de compression du soufflet. On peut aussi prévoir que le soufflet du goulot soit formé de manière telle que sa face d'appui soit disposée, au repos, dans un plan sensiblement transversal par rapport à l'axe longitudinal du flacon. En effet, un soufflet est un organe relativement fragile et pour éviter de l'user prématurément par des manoeuvres maladroites, par exemple désaxées, il est préférable de prévoir une face d'appui sur laquelle peut être exercée, dans une direction unique de manoeuvre, une force permettant d'obtenir une déformation du soufflet.

En se servant des possibilités de moulage par injection, on peut prévoir que le capot comporte un axe longitudinal selon lequel est disposé l'embout distributeur, le (ou les) poussoir(s) latéral(aux) formant une seule pièce avec le capot et pouvant pivoter par rapport au capot autour d'un axe sensiblement perpendiculaire à l'axe dudit capot. Dans une variante avantageuse, on peut prévoir que le capot comporte deux poussoirs latéraux disposés symétriquement par rapport à l'embout distributeur ; chaque poussoir latéral peut être relié au capot par une charnière-film.

On peut encore prévoir que le flacon, le soufflet et l'embout distributeur soient coaxiaux ; le capot peut être fixé sur l'étui de manière amovible ; l'embout distributeur peut être un embout autocassable.

L'invention sera mieux comprise après la lecture de la description d'un mode de réalisation avantageux, qui se réfère au dessin annexé et qui est donnée à titre d'exemple non limitatif.

Sur ce dessin :
- la figure 1 montre une coupe longitudinale simplifiée d'un distributeur selon l'invention avant sa première utilisation ;
- la figure 2 montre, à plus grande échelle, le détail A de la figure 1 ;

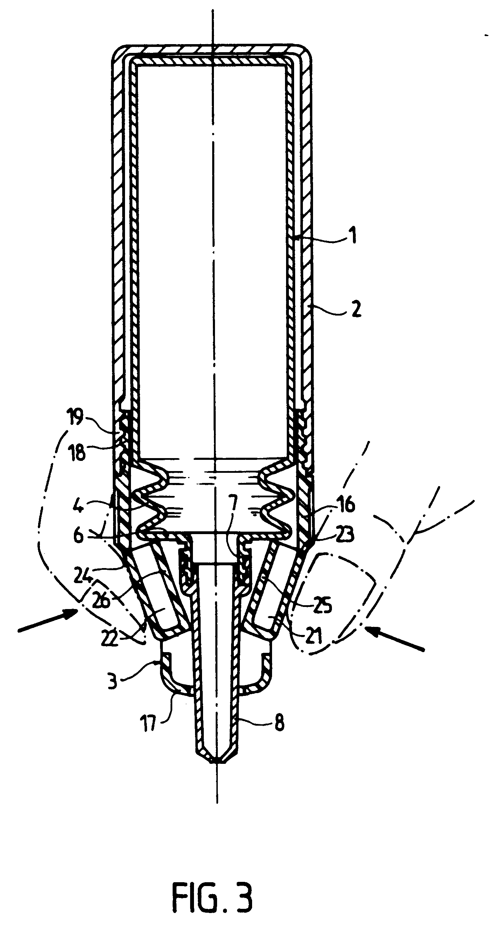

- la figure 3 montre le distributeur selon l'invention au cours de la distribution d'une dose.

On voit, en se référant au dessin, que le distributeur doseur selon l'invention comporte un flacon 1, qui est logé dans un étui 2 et retenu dans celui-ci par un capot 3, monté sur l'étui par vissage. Le flacon 1 a sensiblement la forme d'un cylindre de révolution, fermé, à une de ses deux extrémités, par un fond la et agencé, du côté ouvert opposé au fond 1a, de manière à présenter une zone de goulot ; la zone de goulot comporte, d'une part, un soufflet 4 compressible selon l'axe du flacon 1 et d'autre part, un collet 7.

L'extrémité du soufflet 4, qui est la plus éloignée du fond 1a du flacon 1, est formée par une platine disposée, au repos, dans un plan transversal par rapport à l'axe longitudinal du flacon 1 ; cette platine constitue une face d'appui 6 permettant la compression du soufflet lorsqu'on applique sur la face d'appui 6 une force dirigée vers le fond 1a du flacon 1. Lorsque ladite force est supprimée, le retour de la face d'appui 6 dans sa position initiale de repos s'effectue par le rappel élastique du matériau constitutif de la paroi du soufflet 4.

Le collet 7 est porté par la zone centrale de la face d'appui : il est cylindrique, de section droite circulaire et fait communiquer avec l'extérieur l'intérieur du flacon 1. Ce collet 7 comporte extérieurement un bourrelet d'encliquetage 11, qui permet la fixation d'un embout distributeur 8. L'embout 8 est un tronc de cône à faible conicité, dont l'extrémité la plus large forme une embase 13 et dont l'autre extrémité est fermée par une pointe cassable 9.

La pointe 9 sert à fermer le flacon hermétiquement jusqu'à la première application du produit conditionné. Pour convenance d'utilisation, la pointe 9 est autocassable et comporte une zone de cassure préaffaiblie 10.

L'embase 13 de l'embout 8 est constituée de deux jupes coaxiales 13a, 13b sensiblement cylindriques ; la paroi du collet 7 vient se loger entre les deux jupes. La jupe externe 13a comporte intérieurement une gorge d'encliquetage 15 destinée à recevoir le bourrelet 11 pour assurer le maintien par encliquetage de l'embout 8 sur le collet 7. La jupe interne 13b comporte à son extrémité libre un chanfrein facilitant son introduction dans le collet 7 ; ladite introduction s'effectue avec un léger serrage pour assurer l'étanchéité. Le collet 7 comporte extérieurement une collerette plane 14, qui constitue une butée lors de la mise en place de l'embout 8 sur le collet 7. La jupe 13a comporte intérieurement, sur sa bordure libre, un chanfrein facilitant l'introduction du bourrelet 11 dans la zone annulaire 12, entre les deux jupes 13a, 13b.

L'étui 2 a sensiblement la forme d'un cylindre de révolution fermé par un fond 2a à une de ses deux extrémités et fermé par le capot 3 à l'autre extrémité. Le capot 3 comporte une coupelle 17, évidée en son centre pour permettre le passage de l'embout distributeur 8, et une paroi latérale 16 cylindrique de révolution, solidaire de la coupelle 17. La paroi latérale 16 est munie, à son extrémité libre, d'un filetage extérieur 18. Ce filetage extérieur 18 forme, en combinaison avec un filetage intérieur 19 agencé dans la paroi de l'étui 2 du côté opposé au fond 2a, un dispositif de fixation, qui permet une fixation amovible du capot 3 sur l'étui 2 par vissage. Il est bien clair que ce dispositif de fixation pourrait également être agencé de manière à permettre une autre fixation du capot 3 sur l'étui 2, par exemple, par encliquetage. On pourrait aussi prévoir une fixation non amovible du capot 3 sur l'étui 2, par exemple par collage.

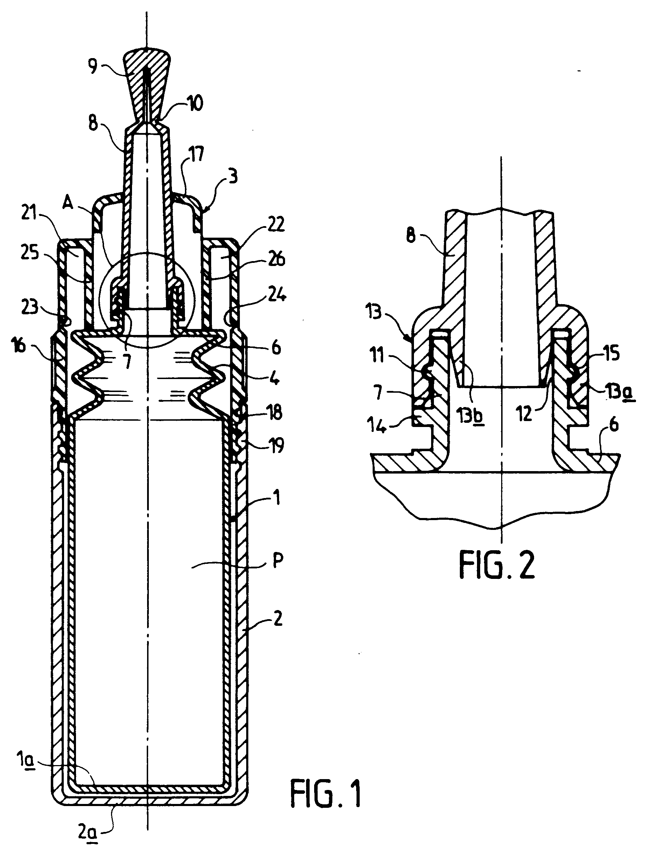

La paroi latérale 16 du capot 3 présente, dans une partie du capot 3 avoisinant la coupelle 17, deux poussoirs radiaux 21 et 22, disposés symétriquement par rapport à l'embout distributeur 8. Tout en étant solidaires de la paroi latérale 16 du capot 3, les poussoirs 21 et 22 sont inclinables par rapport à l'axe longitudinal du capot 3 et ainsi, compte tenu de l'assemblage coaxial du flacon 1, du soufflet 4 et de l'embout 8, inclinables par rapport à l'axe longitudinal du flacon 1. L'inclinaison des poussoirs s'effectue autour de zones de flexion constituées dans la paroi cylindrique 16 du capot 3 par des charnières-film 23,24 indiquées schématiquement sur la figure 1 par des encoches.

La forme des poussoirs 21 et 22 est représentée schématiquement sur la figure 1 par deux retours 25 et 26 respectivement disposés parallèlement à la paroi 16. La longueur de ces retours 25 et 26 ainsi que la position des zones de flexion 23 et 24 sont à choisir de manière que, après insertion d'un flacon 1 dans l'étui 2 et vissage du capot 3 sur l'étui 2, les zones de flexion 23 et 24 se trouvent, par rapport à l'axe longitudinal du flacon 1, dans le même plan transversal que la face d'appui 6 du soufflet 4, et que les retours 25 et 26 effleurent la face d'appui 6.

L'application du produit contenu dans le flacon 1 se fait avec l'embout distributeur 8 tête en bas ; on appuie sur les poussoirs latéraux 21 et 22 et on produit ainsi une compression du soufflet 4, qui est fonction du degré d'inclinaison maximum de ces poussoirs ; le degré d'inclinaison des poussoirs latéraux a donc une influence directe sur la dose de produit distribué. Le réglage de la dose peut ainsi être assuré mécaniquement de façon simple, par exemple en réglant une butée d'enfoncement des poussoirs. Indépendamment du fait que cet agencement du distributeur doseur selon l'invention permet un dosage fin et simple grâce à l'application du principe de leviers, il permet en même temps une manipulation sûre de l'ensemble : la pression sur les poussoirs latéraux étant exercée uniquement par le pouce et l'index d'une main, une partie importante de cette main, y compris les trois doigts restants, est disponible pour tenir l'étui.

La conception du distributeur doseur selon l'invention apporte une simplification considérable à la fabrication d'un dispositif de ce type et réduit notablement les coûts de production y afférents. Elle permet notamment une fabrication simple du capot 3, par exemple par moulage par injection, et évite, grâce à la mémoire de forme inhérente à la matière plastique utilisée pour le soufflet 4, de devoir munir le capot 3 d'un dispositif à effet de ressort. Il en résulte la possibilité d'une fabrication du capot 3 en une seule pièce. De même, on peut, grâce au moulage par injection, obtenir le flacon 1 avec le soufflet 4 en une seule étape de fabrication et en une seule pièce.

Par ailleurs, le distributeur doseur selon l'invention évite la mise en place d'un tube plongeur et permet, en outre, de pouvoir conditionner des produits liquides, indépendamment de leur viscosité. Le consommateur a la possibilité d'une exploitation quasiment totale du produit contenu dans le flacon et évite ainsi les pertes de produit inévitables jusqu'à présent. Enfin, l'étui 2 est rechargeable et peut coopérer avec un flacon 1 jetable, par exemple destiné à une application unique : l'invention permet donc de conserver la majeure partie 2, 3 du distributeur en changeant uniquement la recharge 1, 4, 8 de produit d'où une économie substantielle par rapport à l'état de la technique.

Le distributeur doseur selon l'invention est prévu principalement pour des produits liquides, plus ou moins visqueux ; une adaptation à des produits poudreux serait néanmoins envisageable, sans porter atteinte au principe et aux avantages de la présente invention.

## Revendications

1. Distributeur doseur comportant un flacon (1) renfermant le produit P à distribuer, sur le goulot (4) duquel est fixé un embout distributeur (8), ledit flacon étant loge dans un étui (2) qui est coiffe d'un capot (3), évidé en son centre, ledit capot (3) retenant le flacon (1) dans l'étui (2) et étant traverse par l'embout distributeur (8) pour permettre la distribution, caractérisé par le fait que le goulot (4) du flacon (1) est agencé de manière déformable et que le capot (3) est muni d'au moins un poussoir latéral (21, 22) permettant d'obtenir la déformation du goulot pour provoquer la distribution du produit P.

2. Distributeur selon la revendication 1, caractérisé par le fait que le goulot (4) du flacon (1) comporte un soufflet (4).

3. Distributeur selon la revendication 2, caractérisé par le fait que le soufflet (4) a une face d'appui (6) disposée, au repos, dans un plan sensiblement transversal par rapport à l'axe longitudinal du flacon (1).

4. Distributeur selon l'une des revendications 1 à 3, caractérisé par le fait que le capot (3) comporte un axe longitudinal selon lequel est disposé l'embout distributeur (8), le ou les poussoir(s) latéral(aux) (21, 22) formant une seule pièce avec le capot (3) et pouvant pivoter par rapport au capot (3) autour d'un axe sensiblement perpendiculaire à l'axe dudit capot (3).

5. Distributeur selon la revendication 4, caractérisé par le fait que chaque poussoir latéral (21, 22) est relie au capot (3) par une charnière-film (23, 24).

6. Distributeur selon l'une des revendications 1 à 5, caractérisé par le fait que le capot (3) comporte deux poussoirs latéraux (21, 22) disposés symétriquement par rapport à l'embout distributeur (8).

7. Distributeur selon l'une des revendications 1 à 6, caractérisé par le fait que le flacon (1), le soufflet (4) et l'embout distributeur (8) sont coaxiaux.

8. Distributeur selon l'une des revendications 1 à 7, caractérisé par le fait que le capot (3) est fixe sur l'étui (2) de manière amovible.

9. Distributeur selon l'une des revendications 1 à 8, caractérisé par le fait que l'embout distributeur (8) est un embout autocassable.

## Claims

1. Dosing dispenser including a bottle (1) containing the product P to be dispensed, on the neck (4) of which is fixed a dispenser nozzle (8), the said bottle being housed in a case (2) on which sits a cap (3) recessed at its centre, the said cap (3) retaining the bottle (1) in the case (2) and being penetrated by the dispenser nozzle (8) in order to allow dispensing; characterized by the fact that the neck (4) of the bottle (1) is designed so as to be deformable,and that the cap (3) is equipped with at least one lateral pusher (21, 22) allowing the neck to be deformed so as to cause the product P to be dispensed.

2. Dispenser according to Claim 1, characterized by the fact that the neck (4) of the bottle (1) includes a bellows (4).

3. Dispenser according to Claim 2, characterized by the fact that the bellows (4) has a bearing face (6) lying, when not in operation, in a plane substantially transverse to the longitudinal axis of the bottle (1).

4. Dispenser according to one of Claims 1 to 3, characterized by the fact that the cap (3) has a longitudinal axis on which the dispenser nozzle (8) lies, the lateral pusher or pushers (21, 22) forming one piece with the cap (3) and being able to pivot with respect to the cap (3) about an axis substantially perpendicular to the axis of the said cap (3).

5. Dispenser according to Claim 4, characterized by the fact that each lateral pusher (21, 22) is connected to the cap (3) by a film hinge (23, 24).

6. Dispenser according to one of Claims 1 to 5, characterized by the fact that the cap (3) includes two lateral pushers (21, 22) lying symmetrically with respect to the dispenser nozzle (8).

7. Dispenser according to one of Claims 1 to 6, characterized by the fact that the bottle (1), the bellows (4), and the dispenser nozzle (8) are coaxial.

8. Dispenser according to one of Claims 1 to 7, characterized by the fact that the cap (3) is fixed to the case (2) in a removable manner.

9. Dispenser according to one of Claims 1 to 8, characterized by the fact that the dispenser nozzle (8) is a self-frangible nozzle.

## Patentansprüche

1. Dosierspender mit einem das abzugebende Produkt P enthaltenden Flacon (1), auf dessen Hals (4) ein Abgabekopf (8) angebracht ist, wobei sich der Flacon in einem Etui (2) befindet, das von einer Kappe (3) mit ausgespartem Zentrum bedeckt ist, wobei die Kappe (3) den Flacon (1) in dem Etui (2) hält und von dem Abgabekopf (8) durchquert wird, um die Abgabe zu ermöglichen, dadurch gekennzeichnet, daß der Hals (4) des Flacons (1) verformbar ausgeführt ist, und daß die Kappe (3) wenigstens einen seitlichen Drücker (21, 22) aufweist, der es ermöglicht, die Verformung des Halses hervorzurufen, um die Abgabe des Produktes P zu bewirken.

2. Spender gemäß Anspruch 1, dadurch gekennzeichnet, daß der Hals (4) des Flacons (1) einen Balg (4) aufweist.

3. Spender gemäß Anspruch 2, dadurch gekennzeichnet, daß der Balg (4) eine Auflagefläche (6) besitzt, die sich im Ruhezustand in einer zur Längsachse des Flacons (1) im wesentlichen quer verlaufenden Ebene befindet.

4. Spender gemäß einem der Ansprüche 1 bis 3, dadurch gekennzeichnet, daß die Kappe (3) eine Längsachse aufweist, entlang welcher der Abgabekopf (8) angeordnet ist, wobei der oder die seitliche(n) Drücker (21, 22) mit der Kappe (3) ein einzelnes Bauteil bildet (bilden) und bezüglich der Kappe (3) um eine zur Achse der Kappe (3) im wesentlichen senkrechte Achse schwenkbar ist (sind).

5. Spender gemäß Anspruch 4, dadurch gekennzeichnet, daß jeder seitliche Drücker (21, 22) durch ein Filmscharnier (23, 24) mit der Kappe (3) verbunden ist.

6. Spender gemäß einem der Ansprüche 1 bis 5, dadurch gekennzeichnet, daß die Kappe (3) zwei seitliche Drücker (21, 22) aufweist, die symmetrisch zum Abgabekopf (8) angeordnet sind.

7. Spender gemäß einem der Ansprüche 1 bis 6, dadurch gekennzeichnet, daß der Flacon (1), der Balg (4) und der Abgabekopf (8) koaxial sind.

8. Spender gemäß einem der Ansprüche 1 bis 7, dadurch gekennzeichnet, daß die Kappe (3) abnehmbar auf dem Etui (2) angebracht ist.

9. Spender gemäß einem der Ansprüche 1 bis 8, dadurch gekennzeichnet, daß der Abgabekopf (8) ein abbrechbarer Kopf ist.
